# EUROPEAN PATENT APPLICATION

(11) **EP 1 670 237 A2**
(43) Date of publication of application: **14.06.2006**
(21) Application number: 05022165.4
(22) Date of filing: 11.10.2005
(51) Int. Cl.: H04N 5/073

(54) **Matching un-synchronized image portions**

(30) Priority: 10.12.2004 US 8839
(71) Applicant: MICROSOFT CORPORATION, Redmond, WA 98052 (US)
(72) Inventor: Criminisi, Antonio, Redmond WA 98052 (US); Smyth, Gavin, Redmond WA 98052 (US); Cross, Geoffrey, Redmond WA 98052 (US)
(74) Representative: Goddar, Heinz J.

(57) **Abstract**

A matching system may be used to match unsynchronized camera signals. In one example, the images from each camera may be matched by synchronizing images from each camera such that the scene of each image is determined to be static. Alternatively or additionally, the images from one camera may be compared to images from another camera to determine the best synchronous match. These matched, synchronized image portions may be processed to generate a transformation structure that may be used to rectify the images, e.g., transform images from the cameras as if the cameras had co-planar image planes, or used in any other process, such as calibration of the cameras.

## Description

SUMMARY

The following presents a simplified summary of the disclosure in order to provide a basic understanding to the reader. This summary is not an exhaustive or limiting overview of the disclosure. The summary is not provided to identify key and/or critical elements of the invention, delineate the scope of the invention, or limit the scope of the invention in any way. Its sole purpose is to present some of the concepts disclosed in a simplified form, as an introduction to the more detailed description that is presented later.

Typical stereo camera algorithms assume that the signals coming in from the different cameras are synchronized and that the cameras are rectified. Perfectly synchronized camera signals means that the cameras take pictures at exactly the same time. In reality, perfect synchronization is typically not possible; however, practical implementations rely on an assumption that the camera signals are substantially synchronized. Substantially synchronized cameras may be synchronized to within approximately a few milliseconds of each other. Rectified camera signals means that the images are co-planar, i.e., rectified cameras have co-planar imaging planes. In many cases stereo algorithms may be run based on 'loose' synchronization; however, stereo algorithms may still require accurate rectification.

Images from multiple cameras may be transformed; such as through projective-geometry based techniques to convert them into new images which behave as if they were acquired by co-planar cameras. This geometric transformation of the images is called epipolar rectification. This process is typically achieved on synchronized cameras. However, using unsynchronized cameras may often be cheaper or more convenient.

A matching system may be used to match unsynchronized camera signals. In one example, the images from each camera may be matched by synchronizing images from each camera such that the scene of each image is determined to be static. Alternatively or additionally, the images from one camera may be compared to images from another camera to determine the best synchronous match. These matched, synchronized image portions may be processed to generate a transformation structure that may be used to rectify the images, e.g., transform images from the cameras as if the cameras had co-planar image planes, or used in any other process, such as calibration of the cameras. Camera calibration means estimating the internal and external parameters of a camera, such as the focal length and/or relative geometry of the multiple cameras.

BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:

FIG. 1 is an example computing system for implementing a matching system of FIGs. 4-5;

FIG. 2 is a dataflow diagram of an example transformation system of the prior art;

FIG. 3 is a timeline of an example series of images taken by two cameras;

FIG. 4 is a dataflow diagram of an example matching system;

FIG. 5 is a data flow diagram of the example matching system of FIG. 4 with a different detected scene;

FIG. 6 is a flow chart of an example method of rectifying un-synchronized camera images of the matching system of FIGs. 4 and 5; and

FIG. 7 is a dataflow diagram of an example matching system.

DETAILED DESCRIPTION

Exemplary Operating Environment

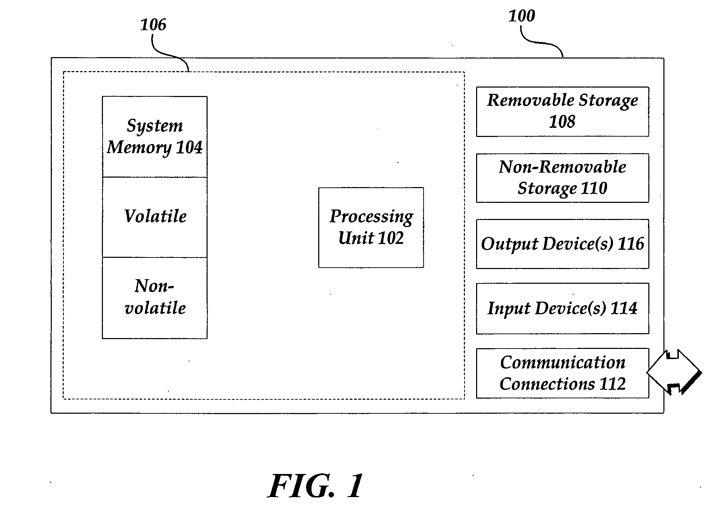

Figure 1 and the following discussion are intended to provide a brief, general description of a suitable computing environment in which a matching system may be implemented. The operating environment of Figure 1 is only one example of a suitable operating environment and is not intended to suggest any limitation as to the scope of use or functionality of the operating environment. Other well known computing systems, environments, and/or configurations that may be suitable for use with a matching system described herein include, but are not limited to, personal computers, server computers, handheld or laptop devices, multiprocessor systems, micro-processor based systems, programmable consumer electronics, network personal computers, mini computers, mainframe computers, distributed computing environments that include any of the above systems or devices, and the like.

Although not required, the matching system will be described in the general context of computer-executable instructions, such as program modules, being executed by one or more computers or other devices. Generally, program modules include routines, programs, objects, components, data structures, etc., that perform particular tasks or implement particular abstract data types. Typically, the functionality of the program modules may be combined or distributed as desired in various environments.

With reference to Figure 1, an exemplary system for implementing the matching system includes a computing device, such as computing device 100. In its most basic configuration, computing device 100 typically includes at least one processing unit 102 and memory 104. Depending on the exact configuration and type of computing device, memory 104 may be volatile (such as RAM), non-volatile (such as ROM, flash memory, etc.) or some combination of the two. This most basic configuration is illustrated in Figure 1 by dashed line 106. Additionally, device 100 may also have additional features and/or functionality. For example, device 100 may also include additional storage (e.g., removable and/or non-removable) including, but not limited to, magnetic or optical disks or tape. Such additional storage is illustrated in Figure 1 by removable storage 108 and non-removable storage 110. Computer storage media includes volatile and nonvolatile, removable and non-removable media implemented in any method or technology for storage of information such as computer readable instructions, data structures, program modules, or other data. Memory 104, removable storage 108, and non-removable storage 110 are all examples of computer storage media. Computer storage media includes, but is not limited to, RAM, ROM, EEPROM, flash memory or other memory technology, CD-ROM, digital versatile disks (DVDs) or other optical storage, magnetic cassettes, magnetic tape, magnetic disk storage or other magnetic storage devices, or any other medium which can be used to store the desired information and which can be accessed by device 100. Any such computer storage media may be part of device 100.

Device 100 may also contain communication connection(s) 112 that allow the device 100 to communicate with other devices. Communications connection(s) 112 is an example of communication media. Communication media typically embodies computer readable instructions, data structures, program modules or other data in a modulated data signal such as a carrier wave or other transport mechanism and includes any information delivery media. The term 'modulated data signal' means a signal that has one or more of its characteristics set or changed in such a manner as to encode information in the signal. By way of example, and not limitation, communication media includes wired media such as a wired network or direct-wired connection, and wireless media such as acoustic, radio frequency, infrared, and other wireless media. The term computer readable media as used herein includes both storage media and communication media.

Device 100 may also have input device(s) 114 such as keyboard, mouse, pen, voice input device, touch input device, laser range finder, infra-red cameras, video input devices, and/or any other input device. Output device(s) 116 such as display, speakers, printer, and/or any other output device may also be included.

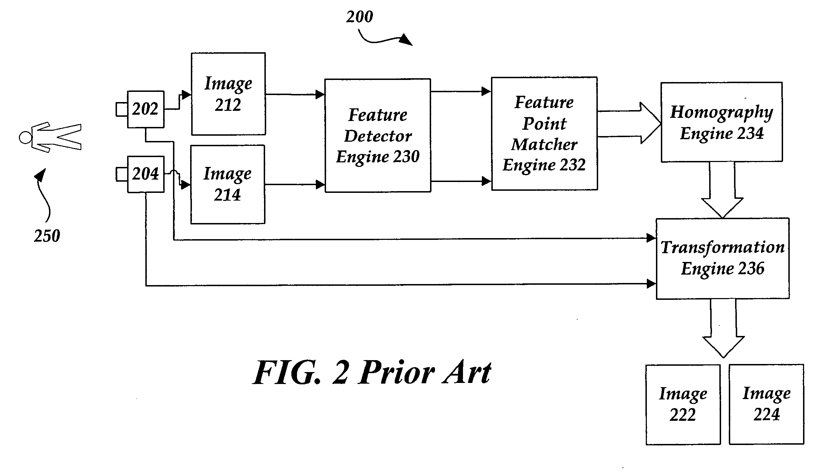

FIG. 2 illustrates a transformation system 200 for rectifying modulated data signals from two or more synchronized cameras 202, 204 of the prior art. For example, the transformation system 200 may use epipolar rectification. In one example, the modulated data signal from a first camera 202 encodes an image 212 and the modulated data signal from the second camera 204 encodes an image 214. The feature detector engine 230 detects image feature points in each image 212, 214. Generally, these points are well-defined and/or sparse. The detected points of the images may be output to a feature point matcher engine 232 which matches the detected points of the first image 212 as corresponding to particular feature points of the second image 214. Any suitable feature matching algorithm may be used, including, for example, Random Sampling Consensus ("RANSAC")-based feature correspondence, and the like. Matching points of the images are output to a homography engine 234 to determine the transformation of each image to a projective plane, e.g., the transformation to convert the actual image planes of cameras 202, 204 to be co-planar. The transformation may be based on epipolar rectification or estimation, such as that by Hartley et al, Multiple View Geometry in Computer Vision, 2000, Cambridge University Press, ISBN: 0521623049. The determined transformation parameters or transformation structure may be output to an image rectification engine 236 to be applied against the images 212, 214 or other images received from the cameras 202, 204 to rectify the images. For example, based on the transformation data structure, the image rectification engine may convert the images to transformed images 222, 224 as if they were received from cameras having co-planar image planes.

As noted above, the images 212, 214 to be transformed must be of the same scene 250, which as shown in FIG. 2, is a person. Prior art transformation systems, to achieve accurate rectification, require that the input images 212, 214 are at least partially overlapping in space, e.g., have some overlap in the image space of the cameras 202, 204, and are sufficiently synchronized in time.

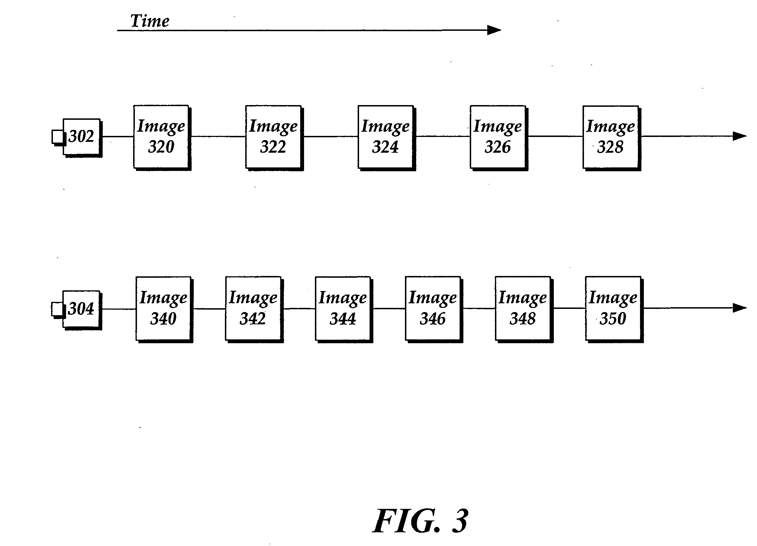

However, some cameras 212, 214 may be un-synchronized in time. For example, FIG. 3 illustrates an example timeline of unsynchronized images taken by two cameras 302, 304. As shown in FIG. 3, camera 302 takes images 320, 322, 324, 326, and 328 spaced over time. Similarly, camera 304 takes images 340, 342, 344, 346, 348, and 350. As shown in FIG. 3, the one or more of the images from camera 302 may not be taken at the same time as the images from camera 304. In this example, one estimated synchronized pairing of images may be to pair image 320 with image 340, to pair image 322 with image 342, to pair image 324 with image 344 and/or image 346, to pair image 326 with image 348, and to pair image 328 with image 350. However, camera timestamps of images may be unreliable. For example, the Universal Serial Bus specification permits image time stamps to be generated within the USB device or elsewhere at the convenience of the implementer. In this manner, the timestamps read by applications may not be particularly accurate indications of actual image capture time.

In addition, with a moving image of a person and/or moving background, the matched images, e.g., image 326 and image 348, may not be of the same image, e.g., some portion of the image may be changed between the time image 326 is taken and the time image 348 is taken. If the camera signals are not synchronized, e.g., un-synchronized, the feature point matcher engine 232 may not be able to accurately match features of the images 326, 348. However, rectification of unsynchronized cameras can be achieved from a set of matched image portions of a static scene. For example, if nothing is moving, then there is no difference between synchronized and unsynchronized cameras. Therefore, unsynchronized cameras may be rectified by automatically detecting instances where the scene is static.

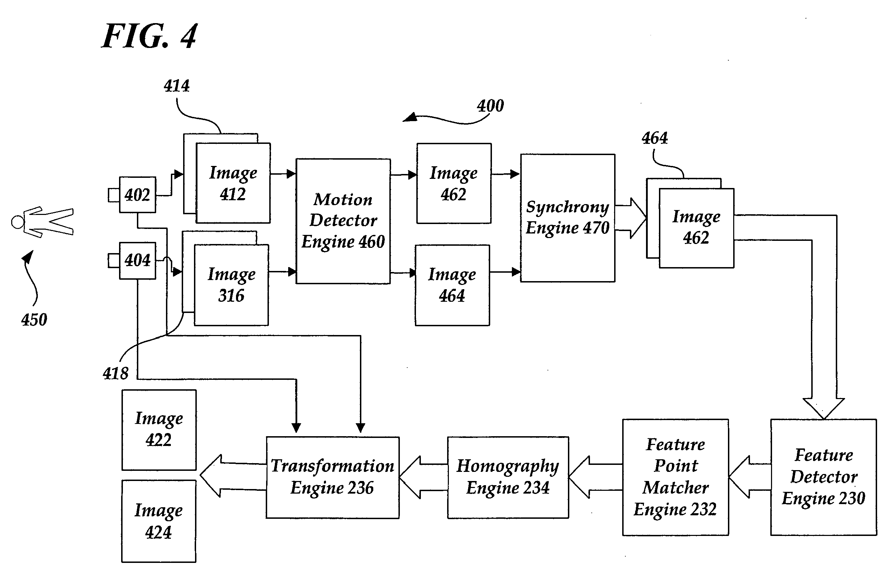

An example matching system 400 is shown in FIG. 4. The matching system 400 may receive images 412, 414 from un-synchronized cameras 402, 404. Each camera 402, 404 may be unsynchronized in time. Although any un-synchronized cameras may be used, example cameras may include digital Universal Serial Bus cameras such as the Logitech QuickCam ® for Notebooks Pro available from Logitech Inc. of Fremont, California, infra red imagers, laser range finders, and the like. To provide similar image features, the cameras 402, 404 must have overlapping views in space. For example, at least a portion of the view of camera 402 may overlap with the view of camera 404. To improve accuracy of transformation data, cameras 402, 404 may have a fixed relative position or geometry, which may be rigidly fixed. In one example, the cameras may be fixed to one another through any suitable means including adhesives, mounting rigs, manufactured in a single housing, and the like.

Each camera may provide a plurality of images which are spaced over time, e.g., a 'movie' of the scene 450. For example, camera 402 may provide two images 412, 414 which are spaced apart in time, and camera 404 may provide two images 416, 418 which are also spaced apart in time.

The sequence of images 412, 414, 416, 418 from each camera may be output to a motion detector engine 460. The motion detector engine may detect images where at least a portion of the scene is moving. For example, the motion detector engine 460 may use optical flow techniques to detect when a portion of an image from one of the cameras 402, 404 moves over time relative one or more other images from the same camera. In one example, the movement engine may compare the image 412 with the image 414, such as by image differencing. More particularly, image 412 may be subtracted from image 414, and the image difference between image 412 and image 414 may indicate a movement in the detected scene 450 represented in the images from camera 402. In this manner, the movement engine may detect images indicating scene movement for any combination of the cameras providing image input to the motion detector engine. In one example, the motion detector engine may detect images from camera 402 indicating scene movement, and may detect images from camera 404 indicating scene movement. In an alternative example, the motion detector engine may detect movement in images from one camera (or a subset of the input cameras) and assume that the other camera images with time frames sufficiently close to the time of movement will also show movement.

The difference between two images from the same camera may be corrupted by electronic noise. Accordingly, a predetermined threshold value may be compared to the image difference to determine if the indicated scene is sufficiently static. Any appropriate threshold may be used and may depend on the quality of the cameras. For example, for the Logitech QuickCam for Notebooks Pro, a suitable threshold may be 8 levels.

Image portions with detected movement may be discarded. In some cases, only a portion of the scene may have moved as indicated by the image difference between image 412 and 414. Accordingly, it may be appropriate to discard only those portions of images where that part of the represented scene is moving, e.g., the static portion of the image may be retained.

The motion detector engine 460 may associate an indicator with each image portion, which may identify the image in temporal space or may indicate the particular static image represented. For example, a time stamp may be associated with each image 462, 464 to indicate the time or relative time that the image was taken of the scene. For example, the images may be numbered or listed over time as 1^{st} image, 2^{nd}, image, and the like. Alternatively, the motion detector engine may detect a time of first movement in the images from one camera, and associate a first static group identifier with the static images occurring before that time of first movement. Similarly, the motion detector engine may associate a second static group identifier with the static images occurring between the time of first detected movement and the second time of detected movement in the images from one camera. The motion detector engine may provide a similar indicator for the static images from each camera.

Since the images from a single camera indicate a static scene in the time between detected movement, at least a portion of those images may be approximately identical. Accordingly, placement in a static image data structure, such as a storage array, may indicate the image's placement in temporal space. More particularly, for each camera, the motion detector engine may discard all but one of the static images in each group of static images occurring in the time between detected movements, and may store those images in temporal order. Accordingly, each camera may be associated with a storage array of images with each static image representing a group of static images between times of detected movement. In this manner, the static image portions 462, 464 may be stored in temporal order, and/or each image portion may be identified with an appropriate indicator.

The static image portions 462, 462 from each respective set of images from the cameras 402, 404 may be output to a synchrony engine 470. The synchrony engine may examine and match the image portion 462 from the first camera with the image portion 464 of the second camera of a similar time static scene. The matched images 462, 464 from each camera may form a synchronized group of images. More particularly, the synchrony engine may match an image identifier from the first image 462 with the image identifier of the second image 464. For example, the image from the first camera associated with a particular time of non-movement may be matched to the image from the second camera from the same time of non-movement, or more particularly, an image from the first camera of the first time of non-movement may be matched to an image from the second camera of the first time of non-movement. In this manner, the lack of time synchronization between the images from different cameras is reduced since the images portions in a synchronized group represent a static scene portion such that synchronization of the images is not dependent on the exact time that the image was taken of the scene.

The synchronized image portions 462, 464 may then be output to a feature detector engine 230, such as that used in the prior art transformation system 200 of FIG. 2. As shown in FIG. 4, the feature detector engine 230 may detect image points in each synchronized image portion 462, 464. The detected points of the images may be output to a feature point matcher engine 232 which matches the detected points in synchronized groups of images 462, 464 as corresponding to both the image portion 462 from the first camera 402 and the image portion 464 from the second camera 404.

The matched image features for each synchronized image set may be stored in any suitable format. For example, the matched features for a group of synchronized images may be stored as a vector of matched features. With multiple synchronized image groups, which may be pairs, the vectors of matched features may be concatenated into a matrix.

Matching points of the synchronized images may be output to a homography engine 234 to determine the transformation of each image to a projective plane, e.g., the transformation to convert the actual image planes of cameras 402, 404 to be co-planar. The determined transformation parameters or transformation structure may be output to a transformation engine 236 to be applied against the images 412, 414, 416, 418 or any other images from the cameras 402, 404 to convert them to transformed images 422, 424 as if they were received from cameras having co-planar image planes.

Since the determination of transformation parameters from the homographic engine may improve with information from multiple static images, the scene 450 viewed by the cameras may be changed. In one example, the cameras may be moved to point at another static image; however, to provide accurate transformation data, the relative geometry of the cameras must remain fixed with respect to one another. Thus, to 'move the cameras', both cameras may be moved in their relative positions by moving a camera rig attached to the cameras.

In other cases, the scene 450 itself may be changed with the cameras 402, 404 maintained in their original position. For example, if the scene is of a person, the person may remain stationary and the cameras may gather the image data 412, 414 through camera 402 and image data 416, 418 through camera 404. The movement engine may detect when the images are static and capture the static images 462, 464 to pass on to the homography engine 234.

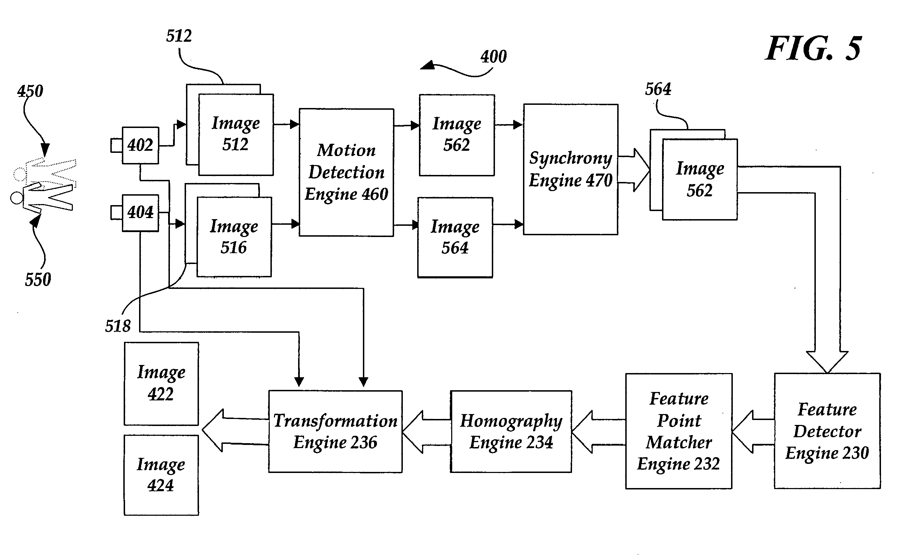

To change the scene and provide additional image data to the homography engine, objects within the scene 450 may be moved to a different position and then maintained as shown in the scene 550 of FIG. 5. In one example, the person in the viewing space of the cameras 402, 404 may move slightly, e.g., to the left, right, forward, backward, hold up an object, and the like, but still be within the viewing area of both cameras. The person may then hold that position for a short amount of time. The static position may be held for any suitable amount of time, which may be approximately 0.5-1 second. The images 512, 514, 516, 518 may be captured and sent to the motion detection engine 460. Static images 562, 564 of the new scene 550 may be sent to the synchrony engine 470 and processed along with the images 462, 464 by the transformation engine 236 to generate the transformation structure.

As noted above, the motion detection engine may detect where the scene 450 is moving, and may discard those frames or portions of images where portions of the scene are moving. The scene may be repeatedly modified and pauses or maintained in a static position, e.g., the person may move slightly and pause and then move slightly and pause, to gather multiple matched groups of corresponding feature points. In one example, the user may move her head or another viewable object to different quadrants of the viewing area of the cameras, e.g., upper-left quadrant, upper right quadrant, lower left quadrant, lower right quadrant, and/or center of the viewing area to provide various static image groups to be used by the homography engine. It is to be appreciated that any scene changing techniques maybe used, including, changing the object closest to the cameras (e.g., person, book, box, and the like), changing a static image (e.g., holding up different calibration charts similar to eye charts and the like), and the like.

In some cases, the user may modify the scene in a suggested or predetermined way, e.g., move her body and/or another viewable object to different sections of the viewing area of the cameras and/or moving the cameras while maintaining the relative geometry of he cameras. The timing of the scene changes may be pre-suggested to the user such that the user changes the scene in a predetermined timing sequence of modifying and maintaining a scene. For example, a user may be instructed to remain stationary for approximately 1 second, then move, and remain stationary for another second, and repeat a predetermined number of times. Alternatively, the user may be instructed to maintain a static scene until the motion detection engine detects a sufficiently static scene, e.g., the image difference is below a predetermined threshold. The motion detection engine may then indicate to the user that the user should modify the scene and maintain that new static scene. The motion detection engine may provide any suitable indication to the user such as an audible signal, a visual signal, and the like. The user may repeat this process a predetermined number of times. In one alternative example, the static images of the scene from the un-synchronized cameras may be processed through the synchrony engine, the feature detector engine, the feature point matcher engine, and the homography engine. If the image data is insufficient to form the transformation structure, e.g., the transformation calibration is not converged, then the motion detection engine may provide an indication to the user to modify the scene and provide another static scene for analysis by the matching system. In this manner, the transformation may be analyzed in real time as the user is providing the static images for processing.

In one example, the motion detection engine 460 of FIG. 4 may weight the image portions from each camera to indicate a level of detected movement. For example, image portions corresponding to a small image difference may be weighted more highly than image portions with detected movement, e.g., images with a high image difference. As noted above, the weighting may be binary, e.g., a static image may have a weight of one and an image indicating movement may have a weight of zero. Alternatively, the weights associated with image portions may be scaled in any suitable manner to indicate a level of movement. The weights may be used by the feature point matcher engine in matching features and/or the homography engine in generating the transformation structure. For example, those images with a high indication that the image is static may be weighted more greatly by the homography engine in developing the transformation structure.

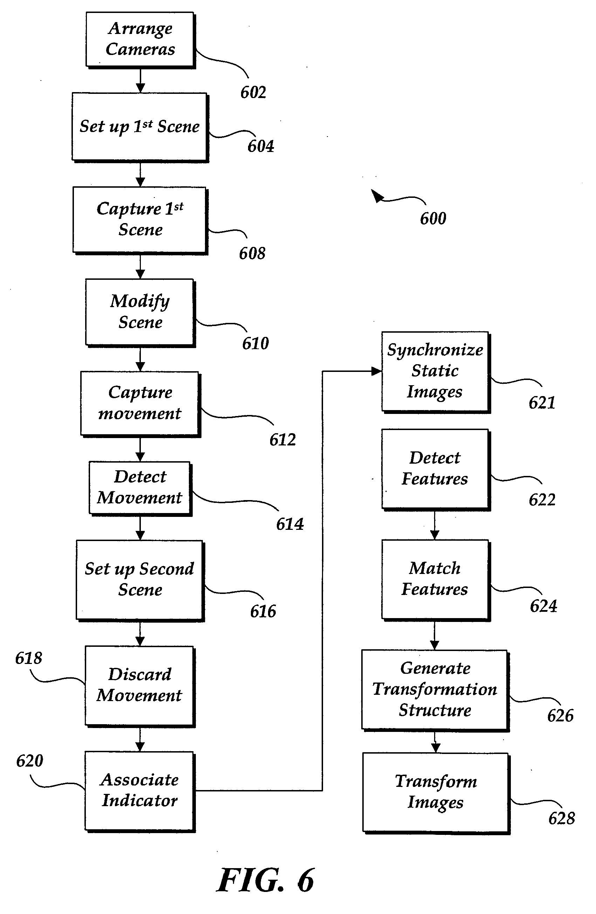

In operation, the matching system 400 of FIGs. 4 and 5 may use a method 600 shown in FIG. 6. A user may arrange 602 at least two cameras to have overlapping viewing areas. The user may set up 604 a first static scene and each camera may capture 606 one or more images of the static scene. The user may then modify 610 the scene (e.g., move at least a portion of her body such as their head or other object) and set up 616 a second static scene. The two or more cameras may capture 612 one or more images indicating the movement in the scene between the first static scene and the second static scene. The movement in the scene may be detected 614, which may be through optical flow techniques applied to multiple images from at least one of the cameras as noted above. Image portions indicating movement may be discarded 618. As noted above, an indicator may be associated 620 with each image portion indicating a static scene which may include a scene indicator, a static group indictor, a placement or order in a data structure, and the like.

The images indicating a static scene from each camera may be matched 621 or synchronized with appropriate static scene images from the other cameras. The features of each static image portion may be detected 622, which may be matched 624 to the detected features of the other image in the synchronized pair of images. A transformation structure, such as a transformation matrix, may be determined 626. The transformation structure may be used to transform 628 images from the at least two cameras to rectify the images from each camera.

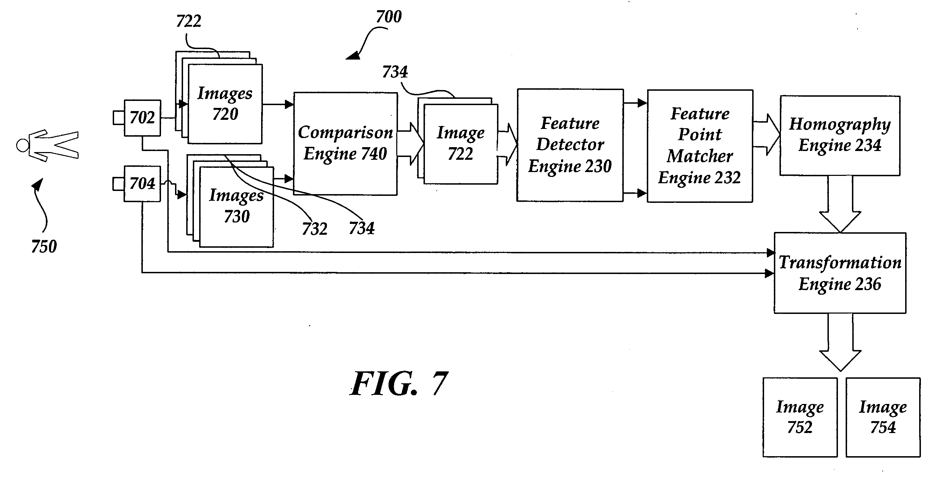

FIG. 7 illustrates another example matching system 700 to match un-synchronized image signals from two or more cameras. The cameras 702, 704 may each provide a plurality of images 720, 730 sequenced over time of a slowly changing scene. A comparison engine 740 may receive the sequence of images 720, 730 from each camera. The comparison engine 740 may take a first image 722 from the set of images 720 from the first camera 702 and compare it to images from the second camera 704. More particularly, the images from the second camera may be from the time over the range of a predetermined amount of time before the time stamp of the image 722 to a predetermined amount of time after the time stamp of the image 722. In this manner, the image 722 may be compared to those images 732 from the second camera which occur at a time t-k to a time t+k. The time range of the images from the second camera may be any suitable amount of time, such as 1 sec. The comparison engine may select the image 734 which best matches the image 722 from that set of images 732, 734 from the second camera. The best matched images 722, 734 may be associated to form a synchronized group of images to be sent to the detection engine for further processing. Any suitable algorithm may be used to determine the best match such as RANSAC-based or optical flow based matching techniques. The images 722, 734 may be sent to the feature detector engine 230 and processed by the transformation engine 236 to generate the transformation structure. The transformation structure may be used to transform the images from the cameras 702, 704 to images 752, 754 as if those images came from cameras having co-planar image planes.

In another example, the matching system 400 of FIG. 4 may be combined with the matching system 700 if FIG. 7. For example, the cameras 402, 404 may be so asynchronous that corresponding 'times' of static images may not be synchronized. More particularly, camera 402 may detect a first time of static images, detect movement, and detect a second time of static images. Camera 404 may also detect and first and second time of static images separated by a detect movement. However, the cameras 402, 404 may be asynchronous to the point where the first time of static images from camera 402 does not correspond to the first time of static images from camera 404. Thus, if the images from the first time of static images are compared from each camera, the images may not match, e.g., the images may not represent the same static scene. In another example, the time of detected movement may be different for each camera, not due to a large asynchronicity, but rather, due to the different viewpoints of each camera 402, 404 of the scene 450. More particularly, due to the different viewpoint of camera 404 relative to camera 402, camera 404 may detect movement in the scene that is not detected by camera 402. Similar to the large asynchronous example, if the images from the second time of static images are compared from each camera, the images may not match, e.g., the images may not represent the same static scene.

To reduce the effect of the above problems, the matching system 700 of FIG. 7 may be combined with the matching system 400. More particularly, the comparison engine 740 may be combined with the matching system 400 of FIG. 4. The comparison engine 740, may take a first image from the set of images from the first camera and compare it to images from the second camera. More particularly, the images from the second camera may be from the time over the range of a predetermined amount of time before the time stamp of the first camera image to a predetermined amount of time after the time stamp of the image. Since the image streams from each camera are sequential, the predetermined time may not have toe extend over the entire image stream, but rather may be fairly small. In the example where one image is compared from each 'time' or segment of static scene, the static image from the first camera may be compared to the static images offset by a predetermined number. For example, the comparison engine may compare a static image from the first camera with images from the second camera offset by -1, 0, +1, and the like. The comparison engine may select the image from the second camera with the most and/or best matches. More generally, the comparison engine may match arbitrary offsets.

While the preferred embodiment of the invention has been illustrated and described, it will be appreciated that various changes can be made therein without departing from the spirit and scope of the invention. For example, the homograhics engine 232 and the transformation engine 234 discussed above with reference to FIGs. 4, 5, and 7 use the matched features of the synchronized images to rectify images from the cameras. However, it is to be appreciated that nay process, method, or technique may use the synchronized image pairs from the synchrony engine. For example, the synchronized image portions from the synchrony engine may be used to calibrate the cameras.

The embodiments of the invention in which an exclusive property or privilege is claimed are defined as follows:

## Claims

1. A method comprising:
a) receiving a plurality of images of a scene from a first camera position;
b) at least one image of the scene from a second camera position, the at least one image from a second camera position being un-synchronized in time relative to the plurality of images from the first camera position;
c) detecting movement of at least a portion of the scene in at least a portion of a first image of the plurality of images from the first camera position, an image portion without detected movement being a static image portion of the first camera position;
d) synchronizing the static image portion of the first camera position with at least a portion of the at least one image from the second camera position.

2. The method of claim 1, further comprising generating a transformation structure based on the synchronized image portions from the first and second camera positions, the transformation structure being for rectifying images from the first and second camera positions.

3. The method of claim 1, further comprising based on the synchronized image portions from the first and second camera positions, calibrating a first camera at the first camera position and a second camera at the second camera position.

4. The method of claim 1, wherein detecting movement includes comparing the at least a portion of the first image and a second image from the plurality of images from the first camera position.

5. The method of claim 1, further comprising discarding the portion of the first image indicating movement of the scene.

6. The method of claim 1, further comprising associating a scene indicator with each static image portion of the first camera position.

7. The method of claim 4, further comprising detecting movement of the scene in at least a portion of a first image of the at least one image from the second camera position, an image portion without detected movement being a static image portion of the second camera position.

8. The method of claim 7, further comprising associating a scene indicator with each static image portion of the second camera position, and wherein synchronizing includes matching the scene indicators of the static image portions of the first camera position with the scene indicators of the static image portions of the second camera position.

9. The method of claim 1, wherein synchronizing includes forming at least one group of synchronized image portions, the group including at least one static image portion from the first camera position and at least one static image portion from the second camera position.

10. The method of claim 9, wherein synchronizing includes forming at least a first group of synchronized image portions and a second group of synchronized image portions, each group including at least one static image portion from the first camera position and at least one static image portion from the second camera position.

11. The method of claim 10, wherein the first group of synchronized images represents a first scene and the second group of synchronized images represents a second scene.

12. The method of claim 1, further comprising detecting at least one feature in each synchronized image portion and matching the at least one feature in the synchronized image portion from the first camera position with at least one feature in the synchronized image portion of the second camera position.

13. The method of claim 1, further comprising associating a weight with the first image portion indicating movement.

14. The method of claim 1, wherein synchronizing includes detecting at least one feature in the static image portion of the first camera position, detecting at least one feature in the at least one image from the second camera position, comparing the at least one feature in the static image portion of the first camera position with the at least one feature in the at least one image from the second camera position, and synchronizing the static image portion of the first camera position with an image portion from the second camera position having the best matching at least one feature with the at least one feature in the static image portion of the first camera.

15. A method comprising:
a) instructing a user to set up a first static scene in a viewing area of a first camera and a second camera, the first camera being un-synchronized in time relative to the second camera;
b) capturing at least one first image of the first static scene with each of the first camera and the second camera;
c) associating the at least one first image from the first camera and the second camera to form a first synchronized group of images;
d) instructing the user to set up a second static scene in the viewing area of the first camera and the second camera;
e) capturing at least one second image of the second static scene with each of the first camera and the second camera; and
f) associating the at least one second image from the first camera and the second camera to form a second synchronized group of images.

16. The method of claim 15, further comprising based on the first and second synchronized groups of images, generating a transformation structure for converting images from the first and second cameras as if the first and second cameras had co-planar image planes.

17. The method of claim 15, further comprising based on the first and second synchronized groups of images, calibrating the first and second camera.

18. The method of claim 15, wherein instructing the user to set up a second static scene includes indicating to the user that the first static scene is captured.

19. The method of claim 15, wherein capturing the at least one first image includes detecting movement of the first static scene with at least one of the first camera and the second camera.

20. The method of claim 15, further comprising, in response to non-convergence of generating a transformation structure, indicating to the user to set up a third static scene in the viewing area of the first camera and the second camera, and capturing at least one third image of the third static scene with each of the first camera and the second camera.

21. The method of claim 15, wherein instructing the user to set up a second static scene occurs before capturing at least one first image of the first static scene.

22. The method of claim 21, further comprising detecting movement of the first scene to the second scene.

23. The method of claim 22, further comprising associating a predetermined weight with images indicating movement of the first scene to the second scene.

24. The method of claim 23, wherein the weight associated with images indicating movement reduces an effect of those images in generating the transformation structure.

25. The method of claim 15, further comprising associating an indicator with the at least one first image of the first static scene of the first camera and associating the indicator with the at least one first image of the first static scene of the second camera.

26. The method of claim 15, wherein instructing the user to set up a second static scene occurs after the at least one first image of the first static scene with each of the first camera and the second cameras are captured.

27. One or more computer readable media containing executable components comprising:
a) a first digital camera providing a first modulated data signal representing a first plurality of images;
b) a second digital camera providing a second modulated data signal representing a second plurality of images;
c) a motion detection engine for receiving the first modulate data signal and the second modulated data signal, and for determining which images from the first camera and the second camera represent a static first scene;
d) a synchrony engine for receiving the static images from the first camera and the second camera and for synchronizing at least one static image from the first camera with at least one static image from the second camera;
e) a feature detector engine for detecting at least one feature of the at least one static image from the first camera, and for detecting at least one feature of the at least one static image from the second camera; and
f) a feature point matcher engine for matching the at least one feature of the at least one static image from the first camera with the at least one feature of the at least one static image from the second camera.

28. The one or more computer readable media of claim 27, further comprising a homography engine for generating a transformation data structure for transforming images from the first and second cameras as if the first and second cameras had co-planar image planes.

29. The one or more computer readable media of claim 28, further comprising a transformation engine for transforming images from the first and second cameras as if the first and second cameras had co-planar image planes based on the transformation structure from the homography engine.

30. The one or more computer readable media of claim 27, further comprising a calibration engine for generating calibration information of at least one of the first camera and the second camera.

31. The one or more computer readable media of claim 27, wherein the motion detection engine is for comparing a first image from the first camera with a second image from the first camera to detect movement of at least a portion of the scene.

32. The one or more computer readable media of claim 31, wherein the movement engine associates a weight with each image portion indicating movement of at least a portion of the scene.

33. The one or more computer readable media of claim 31, wherein the motion detection engine generates an image difference between the first image and the second image.

34. The one or more computer readable media of claim 27, wherein the motion detection engine associates a first indicator with a first static image from the first camera and associates a first indicator with a first static image from the second camera.

35. The one or more computer readable media of claim 34, wherein the first indicator includes a first group indicator indicating a group of one or more images of the first camera occurring between a first movement and a second movement of the scene, and the second indicator includes a second group indicator indicating a group of one or more images occurring between a first movement and a second movement of the scene.

36. The one or more computer readable media of claim 35, wherein the synchrony engine compares the first group indicator and the second group indicator when synchronizing at least one static image from the first camera with at least one static image from the second camera.

37. One or more computer readable media containing executable components comprising:
a) first means for generating a first digital image and a third digital image;
b) second means for generating a second digital image and a fourth digital image;
c) means for detecting movement of the scene based on the first image;
d) means for synchronizing the first image and the second image;
e) means for generating a transformation structure; and
f) means for transforming the third and fourth digital images as if an image plane of the first means for generating and an image plane of the second means for generating were co-planar.

38. One or more computer readable media containing computer executable instructions that, when implemented, perform a method comprising:
a) receiving a first set of images over time from a first camera;
b) receiving a second set of images over time from a second camera;
c) comparing a first image from the first set of images with at least a portion of the second set of images;
d) based on the comparison, determining a best match image from the at least a portion of the second set of images;
e) detecting at least one feature in the first image;
f) detecting at least one feature in the best match image;
g) matching the at least one feature in the first image with the at least one feature in the best match image;
h) generating a transformation structure based on the matching features of the first image and the best match image, the transformation structure for transforming images from the first camera and the second camera t images as if the first and second cameras had co-planar image planes.

39. The one or more computer readable media of claim 38, wherein the at least a portion of the second set of images includes images occurring at a predetermined time before a time of the first image.

40. The one or more computer readable media of claim 38, wherein the at least a portion of the second set of images includes images occurring at a predetermined time after a time of the first image.

41. One or more computer readable media containing computer executable components comprising:
a) first means for generating a first digital image and a third digital image;
b) second means for generating a second digital image, a fourth digital image, and a fifth digital image;
c) means for comparing the first digital image with the second image and the fifth image, wherein the second and fifth images each have a time stamp within a predetermined threshold of a time stamp of the first image.
d) means for generating a transformation structure; and
e) means for transforming the third and fourth digital images as if an image plane of the first means for generating and an image plane of the second means for generating were co-planar.
